Europäisches Patentamt

European Patent Office

Office européen des brevets

(19)

(11) **EP 1 080 773 A1**

(12) # DEMANDE DE BREVET EUROPEEN

(43) Date de publication:
**07.03.2001 Bulletin 2001/10**

(51) Int Cl.⁷: **B01D 53/04**

(21) Numéro de dépôt: **00402346.1**

(22) Date de dépôt: **23.08.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **03.09.1999 FR 9911085**

(71) Demandeurs:
- **L'air Liquide Société Anonyme pour l'étude et l'exploration des procédés Georges Claude**
  **75321 Paris Cédex 07 (FR)**
- **L'AIR LIQUIDE S.A.**
  **75321 Paris Cédex 07 (FR)**

(72) Inventeurs:
- **Monereau, Christian**
  **75011 Paris (FR)**
- **Miniscloux, Didier, L'Air Liquide Pro. & Con. Inc.**
  **Houston, Texas 77056 (US)**
- **Combier, Alain, L'Air Liquide Espana S.A.**
  **28001 Madrid (ES)**

(74) Mandataire: **Conan, Philippe Claude et al**
**L'Air Liquide S.A.,**
**DSPI,**
**Services Brevets et Marques,**
**75 Quai d'Orsay**
**75321 Paris Cedex 07 (FR)**

(54) **Procédé et système de purification d'air à régénération thermique**

(57) Un procédé et un système de purification de gaz, tel l'air avant distillation cryogénique, dans lequel on contrôle, on modifie et/ou on régule au moins un paramètre d'énergie choisi parmi le débit du gaz de régénération entrant et/ou sortant d'au moins un adsorbeur, la durée de l'étape de régénération et la température de régénération du gaz de régénération entrant dans au moins un adsorbeur, en fonction d'au moins une condition opératoire choisie parmi la pression du gaz à purifier entrant et/ou sortant d'au moins un adsorbeur, le débit du gaz à purifier entrant et/ou sortant d'au moins un adsorbeur, la température (Ta) du gaz à purifier entrant dans au moins un adsorbeur et la teneur en impuretés contenues dans le gaz à purifier entrant dans au moins un adsorbeur et en fonction du profil thermique à la sortie du front de chaleur en sortie d'au moins un adsorbeur en fin de régénération.

EP 1 080 773 A1

**Description**

L'invention est relative à l'épuration de l'air destiné à être fractionné par voie cryogénique du type dans lequel l'air est séché, décarbonaté et débarrassé au moins partiellement des polluants atmosphériques secondaires, tels qu'hydrocarbures, oxydes d'azote... par passage à travers d'une ou plusieurs masses d'adsorbant.

Classiquement, la masse d'adsorbant est cycliquement régénérée par chauffage et/ou balayage avant d'être à nouveau utilisé en phase d'adsorption.

Actuellement, deux types de procédés sont plus particulièrement utilisés à cette fin, à savoir :

- les procédés P.S.A. où l'essentiel de la puissance de régénération est apportée par effet de pression ; et
- les procédés T.S.A où l'essentiel de cette même puissance de régénération est apportée par effet de température.

De façon moins classique, des solutions hybrides sont également proposées à cette fin, notamment par le document US-A-5,614,000.

Habituellement, un cycle de procédé TSA (Temperature Swing Adsorption)de purification d'air comporte les étapes suivantes :

a) purification de l'air par adsorption des impuretés à pression super-atmosphérique et à température ambiante,
b) dépressurisation de l'adsorbeur jusqu'à la pression atmosphérique,
c) régénération de l'adsorbant à pression atmosphérique, notamment par les gaz résiduaires ou gaz déchets, typiquement de l'azote impur provenant d'une unité de séparation d'air et réchauffé jusqu'à une température supérieure à l'ambiante au moyen d'un ou plusieurs échangeurs thermiques,
d) refroidissement à température ambiante ou sub-ambiante de l'adsorbant, notamment en continuant à y introduire ledit gaz résiduaire issu de l'unité de séparation d'air, mais non réchauffé,
e) repressurisation de l'adsorbeur avec de l'air purifié issu, par exemple, d'un autre adsorbeur se trouvant en phase de production.

De façon moins classique, la régénération peut s'effectuer à une pression sensiblement différente de la pression atmosphérique, soit supérieure, soit même inférieure à cette dernière par utilisation dans ce cas de moyens de pompage sous vide adéquats.

Un cycle de procédé PSA (Pressure Swing Adsorption) de purification d'air comporte, quant à lui, sensiblement les mêmes étapes a), b) et e), mais se distingue d'un procédé TSA par une absence de réchauffement du ou des gaz résiduaires lors de l'étape de régénération (étape c), donc l'absence de l'étape d) et, en général, un temps de cycle plus court qu'en procédé TSA.

Généralement, les dispositifs de prétraitement d'air comprennent deux adsorbeurs, fonctionnant de manière alternée, c'est-à-dire que l'un des adsorbeurs est en phase de production, pendant que l'autre est en phase de régénération.

De tels procédés TSA de purification d'air sont notamment décrit dans le document US-A-3,738,084.

Le procédé, qu'il soit de type PSA ou TSA, peut mettre en oeuvre un seul ou plusieurs lits adsorbants, c'est-à-dire un multi-lits.

Les adsorbants utilisés sont, de façon non limitative, des zéolites, des alumines activées, des gels de silice, des zéolites échangées, des alumines dopées...

En outre, les adsorbeurs peuvent être, selon le cas, à axe vertical ou horizontal, ou encore de type radial...

Toutefois, dans tous les cas, l'objet de l'épuration est d'arrêter les impuretés $H_2O$ et $CO_2$, et les autres contaminants éventuels susceptibles d'être présents dans le flux gazeux, jusqu'à des teneurs compatibles avec le bon fonctionnement de l'unité cryogénique, que ce soit au niveau des performances ou de la sécurité des équipements.

En effet, en l'absence d'un tel prétraitement de l'air pour éliminer ses impuretés $CO_2$ et eau, on assiste à une condensation et/ou à une solidification de ces impuretés lors du refroidissement de l'air à température cryogénique, d'où il peut résulter des problèmes de colmatage de l'équipement, notamment les échangeurs thermiques, des colonnes de distillation...

En outre, il est également d'usage d'éliminer au moins partiellement les impuretés hydrocarbures et oxydes d'azote susceptibles d'être présentes dans l'air afin d'éviter tout risque de détérioration de l'équipement, en particulier de la ou des colonnes de distillation situées en aval de la boîte froide.

Typiquement, les valeurs maximales de teneurs en impuretés admises sont, en pic, inférieures à 1 vpm et, en moyenne, sensiblement inférieures à cette valeur de 1 vpm.

Habituellement, les différentes conditions de fonctionnement pouvant se rencontrer sur un site sont prises en compte lors du dimensionnement de l'unité afin d'assurer en toutes circonstances un bon fonctionnement de l'unité de distillation cryogénique située en aval des épurateurs d'air, laquelle est généralement appelée ASU pour Air Separation Unit.

Les améliorations apportées jusqu'ici à ce type de procédé portent :

- soit sur la sélection des adsorbants : nature, multilit, granulométrie...,
- soit sur les procédés eux-mêmes : température de régénération, choix du nombre d'adsorbeurs...,

**-** soit sur la réduction d'énergie à procédé donné.

En ce qui concerne les améliorations apportées aux adsorbants ou aux procédés eux-mêmes, on peut notamment citer les documents suivants : US-A-5,531,808, US-A-5,587,003, US-A-4,233,038, US-A-5,232,474, EP-A-744205, EP-A-590946, EP-A-909823, EP-A-909824, EP-A-909825, EP-A-862937, EP-A-862936, EP-A-766991, EP-A-766989 et EP-A-862938.

Par ailleurs, en ce qui concerne les améliorations apportées à la réduction d'énergie consommée, on peut citer les documents US-A-4,472,178 portant sur la récupération de la chaleur d'adsorption dans un régénérateur ; US-A-4,627,856 concernant un procédé permettant d'obtenir une diminution de l'énergie nécessaire en régénérant séparément l'adsorbant pour l'arrêt de l'eau et celui pour l'arrêt du $CO_2$ et US-A-5,766,311 ayant trait à un procédé de régénération par pulsations thermiques multiples.

L'utilisation d'adsorbeurs à circulation radiale du flux gazeux permettant de diminuer les pertes de charge peut également rentrer dans cette catégorie ; la réduction d'énergie portant alors sur la compression de l'air.

Toutes ces méthodes consistent donc à mettre en oeuvre des équipements supplémentaires : régénérateur, réchauffeur interne, tuyauterie de liaison...

Dès lors, on comprend immédiatement que ces procédés engendrent une augmentation de la complexité de l'équipement.

Il s'ensuit que l'augmentation des coûts de l'installation qui en résulte doit donc être plus que compensée par les économies d'énergie pour que ces procédés soient industriellement intéressants.

Par opposition, la présente invention vise à améliorer les procédés connus de purification de gaz, en particulier d'air, grâce à une diminution notable de la quantité d'énergie consommée.

Dit autrement, la présente invention vise à diminuer la quantité d'énergie consommée dans les procédés connus de purification de gaz non plus par ajout de matériels coûteux mais par l'optimisation à chaque cycle des conditions de régénération.

En d'autres termes, le but de la présente invention est de modifier les conditions de fonctionnement d'un procédé d'épuration de gaz de type TSA en fonction de certains paramètres extérieurs, telles que les conditions climatiques par exemple, afin d'économiser de l'énergie en profitant de conditions de fonctionnement plus favorables que celles prises en cause lors du dimensionnement, tel que réalisé classiquement dans l'art antérieur, c'est-à-dire en mettant en oeuvre de nouvelles méthodes de calcul et de régulation plutôt que de nouveaux équipements.

En effet, bien qu'il existe un certain nombre de documents portant sur des procédés de régulation d'unités de purification de gaz mettant en oeuvre des procédés TSA, aucun de ceux-ci ne permet d'aboutir à des performances aussi importantes que celles obtenues grâce à la présente invention.

A ce titre, on peut citer les documents :

**-** US-A-3,808,773 décrivant un procédé comprenant une étape de régénération de l'adsorbant commençant dès que les impuretés $CO_2$ percent, c'est-à-dire dès que le lit d'adsorbant est saturé par ces impuretés $CO_2$. Les conditions de régénération ne subissent aucune modification ou variation durant cette étape de régénération ;

**-** US-A-4,472,178 précisant que l'étape d'adsorption se termine lorsque la teneur en impuretés $CO_2$ dans l'air purifié atteint 1 vpm. Là non plus, les conditions de régénération ne subissent aucune modification ou ajustage durant l'étape de régénération ;

**-** US-A-5,531,808 enseignant une unité de type TSA équipée de moyens de contrôle et de régulation conventionnels, c'est-à-dire avec régulation des débits de gaz, pour fonctionner de façon efficace continuellement. Selon ce document, l'étape d'adsorption se termine quand le front de $CO_2$ atteint un point déterminé dans le lit d'adsorbant. Aucune méthode permettant de réaliser une économie d'énergie n'y est décrite ;

**-** US-A-5,766,311 concerne une régénération par pulsations thermiques multiples avec sélection du débit de gaz résiduaire et des variations de température, de manière à contrôler le temps de désorption. Aucune régulation en fonction des conditions opératoires n'y est décrite ; et

**-** US-A-5,846,295 enseigne un contrôle de l'unité TSA basé sur une régulation de la température d'entrée avec mise en oeuvre d'un programme de contrôle de durée et de moyens de commande de vannes adaptés.

Ainsi, on comprend que, jusqu'à présent, les procédés de régulation connus ont porté sur un fonctionnement satisfaisant de l'unité d'épuration (pas de percée en eau, pas de percée en $CO_2$...), ou sur une régulation classique des températures et/ou des débits.

Comme expliqué ci-avant, le but de la présente invention est dès lors d'améliorer ces procédés connus grâce à une adaptation efficace du procédé de purification non seulement pour satisfaire l'arrêt des impuretés mais aussi pour économiser de l'énergie, dès que les conditions de service réelles le permettent, en modifiant des paramètres de fonctionnement du cycle de purification.

L'invention concerne alors un procédé de purification d'un flux gazeux à purifier contenant au moins une impureté choisie parmi le dioxyde de carbone ($CO_2$) et la vapeur d'eau ($H_2O$), comprenant :

**-** au moins une étape d'adsorption sur au moins un lit d'adsorbant contenu dans au moins un adsorbeur, d'au moins une partie des impuretés contenues dans le flux gazeux à purifier, le flux gazeux à purifier étant à une température d'adsorption (Ta), et

- au moins une étape de régénération d'au moins une partie dudit lit d'adsorbant contenu dans ledit au moins un adsorbeur avec au moins un gaz de régénération introduit dans ledit au moins un adsorbeur, la température de régénération (Tr) dudit gaz de régénération étant supérieure à la température (Ta) du flux gazeux à purifier,

caractérisé en ce qu'on contrôle, on modifie et/ou on régule au moins un paramètre d'énergie choisi parmi le débit du gaz de régénération entrant et/ou sortant dudit au moins un adsorbeur, la durée de l'étape de régénération et la température de régénération (Tr) dudit gaz de régénération entrant dans ledit au moins un adsorbeur, en fonction d'au moins une condition opératoire choisie parmi la pression du flux gazeux à purifier entrant et/ou sortant dudit au moins un adsorbeur, le débit du flux gazeux à purifier entrant et/ou sortant dudit au moins un adsorbeur, la température (Ta) du flux gazeux à purifier entrant dans ledit au moins un adsorbeur et/ou la teneur en au moins une desdites impuretés contenues dans le flux gazeux à purifier entrant dans ledit au moins un adsorbeur, et en fonction du profil thermique à la sortie du front de chaleur en sortie d'au moins un adsorbeur en fin de régénération.

Selon le cas, le procédé de l'invention peut comprendre l'une ou plusieurs des caractéristiques suivantes :

- il comporte au moins une étape de détermination directe ou indirecte d'au moins une desdites conditions opératoires.
- au moins une desdites conditions opératoires est déterminée directement par au moins une mesure :

  . de la pression du flux gazeux à purifier entrant et/ou sortant d'au moins un adsorbeur, de préférence au moyen d'un manomètre,
  . du débit du flux gazeux à purifier entrant et/ou sortant d'au moins un adsorbeur, de préférence au moyen d'un débitmètre,
  . de la température (Ta) du flux gazeux à purifier entrant dans au moins un adsorbeur, de préférence au moyen d'un thermomètre ou d'un capteur de température, et/ou
  . de la teneur en au moins une impureté du flux gazeux à purifier entrant dans au moins un adsorbeur, de préférence au moyen d'un analyseur de gaz.

- au moins une desdites conditions opératoires est déterminée indirectement par au moins une mesure prise parmi :

  . une ou plusieurs conditions atmosphériques, de préférence une ou plusieurs conditions atmosphériques choisies dans le groupe formé par la température, la pression et/ou l'hygrométrie ;

. une ou plusieurs conditions à l'aspiration d'au moins un compresseur de gaz comprimant le gaz à épurer de préférence une ou plusieurs conditions à l'aspiration du compresseur choisies dans le groupe formé par la température, la pression et/ou l'hygrométrie ;

. une ou plusieurs conditions de pression et/ou température au moins au niveau d'au moins un séparateur fluide/liquide, le liquide à séparer étant essentiellement l'eau atmosphérique et/ou de l'eau de réfrigération issu d'un échange thermique par contact direct ;

. une ou plusieurs conditions de température dans au moins un lit d'adsorbant ; et

. une ou plusieurs conditions de fonctionnement d'un compresseur de gaz, en particulier l'énergie consommée et/ou la vitesse de rotation du compresseur.

- on corrige au moins un paramètre d'énergie en fonction du profil thermique à la sortie du front de chaleur en opérant, de préférence, une mesure de la température maximale pendant la sortie dudit front de chaleur et une comparaison de cette température maximale mesurée avec une température cible prédéterminée.

- la pression d'adsorption est comprise entre 2 bar et 30 bar; et/ou

- la pression de régénération est comprise entre 1 bar et 30 bar ; et/ou

- la température d'adsorption (Ta) est comprise entre 0°C et +80°C ; et/ou

- la température de régénération (Tr) est comprise entre 20°C et 200°C.

- le rapport du débit de régénération au débit d'adsorption est compris entre 5% et 80%.

- il comporte au moins une étape de distillation cryogénique du flux de gaz purifié sortant d'au moins un adsorbeur.

- le flux gazeux à purifier est de l'air.

- le gaz de régénération est essentiellement de l'azote ou un flux gazeux contenant de l'oxygène.

- au moins un lit d'adsorbant contient une zéolite X ayant un rapport Si/Al d'environ 1 à environ 1.5 et/ou au moins un lit de particules d'alumine activée.

- au moins un lit de particules d'alumine activée est situé en amont d'au moins un lit de zéolite X, de préférence de zéolite LSX ayant un rapport Si/Al d'environ 1.

- il est choisi parmi les procédés TSA.

- l'alumine est une alumine imprégnée par une solution de sels de métaux alcalins ou alcalino-terreux, de préférence l'alumine contient moins de 10% en poids d'un ou plusieurs métaux alcalins ou alcalino-terreux, en particulier le ou les métaux sont choisis dans le groupe formé par le sodium (Na$^+$), le potassium (K$^+$) et le calcium (Ca$^{2+}$) .

- l'alumine contient au moins 1% en poids d'un ou plusieurs métaux alcalins ou alcalino-terreux, de préférence de 2 à 9.8 % en poids d'un ou plusieurs métaux alcalins ou alcalino-terreux, préférentiellement au moins 3.5 % en poids d'un ou plusieurs métaux alcalins ou alcalino-terreux.
- la zéolite X ayant un rapport Si/Al < 1.15, de préférence de l'ordre de 1, est échangée ou contient moins de 35% de cations potassium (K$^+$), de 1 à 99% de cations sodium (Na$^+$) et moins de 99% de cations calcium (Ca$^{2+}$), de préférence de 0.01% à 12% de cations potassium (K$^+$), de 1 à 99% de cations calcium (Ca$^{2+}$) et de 1 à 99% de cations sodium (Na$^+$).
- la zéolite X ayant un rapport Si/Al < 1.15, de préférence de l'ordre de 1, est échangée ou contient moins de 10% de cations potassium (K$^+$), de 1 à 50% de cations sodium (Na$^+$) et de 50 à 99% de cations calcium (Ca$^{2+}$), de préférence au moins 66% de cations calcium (Ca$^{2+}$) et préférentiellement encore de 80 à 96% de cations calcium.
- la zéolite X ayant un rapport Si/Al < 1.15, de préférence de l'ordre de 1, est échangée ou contient de 0 à 7% de cations potassium (K$^+$), de 4 à 11 % de cations sodium (Na$^+$) et de 82 à 92% de cations calcium (Ca$^{2+}$),
- la zéolite X ayant un rapport Si/Al < 1.15, de préférence de l'ordre de 1, est échangée ou contient, en outre, de 0 à 98 % de cations lithium (Li$^+$), de préférence de 60 à 96% de cations lithium.

De plus, l'invention porte aussi sur un système de purification de gaz, comprenant :

- au moins un adsorbeur contenant au moins un lit d'adsorbant,
- au moins une source de flux gazeux à purifier contenant au moins une impureté choisie parmi le dioxyde de carbone (CO$_2$) et la vapeur d'eau (H$_2$0),
- au moins une source de gaz de régénération,
- des moyens d'alimentation d'au moins ledit adsorbeur pour introduire ou alimenter alternativement ledit au moins un adsorbeur :

    . en le flux gazeux à purifier pour adsorber au moins une partie desdites impuretés contenues dans ledit flux gazeux à purifier sur ledit adsorbant, et
    . en le gaz de régénération pour désorber au moins une partie desdites impuretés adsorbées sur ledit adsorbant,

- des moyens de contrôle pour contrôler, modifier et/ou réguler au moins un paramètre d'énergie choisi parmi le débit du gaz de régénération entrant et/ou sortant dudit au moins un adsorbeur, la durée de l'étape de régénération et la température de régénération (Tr) dudit gaz de régénération entrant dans ledit au moins un adsorbeur, en fonction d'au moins une condition opératoire choisie parmi la pression du flux gazeux à purifier entrant et/ou sortant dudit au moins un adsorbeur, le débit du flux gazeux à purifier entrant et/ou sortant dudit au moins un adsorbeur, la température (Ta) du flux gazeux à purifier entrant dans ledit au moins un adsorbeur et la teneur en au moins une desdites impuretés contenues dans flux gazeux à purifier entrant dans ledit au moins un adsorbeur, et en fonction du profil thermique à la sortie du front de chaleur en sortie d'au moins un adsorbeur en fin de régénération.

De préférence, le système comporte au moins deux adsorbeurs fonctionnant en alternance, l'un étant en phase de régénération alors que l'autre est en phase d'adsorption, c'est-à-dire de production de gaz, en particulier d'air purifié.

Grâce à la présente invention, des économies d'énergie importantes peuvent être réalisées en tirant profit suivant les cas rencontrés :

- d'un changement des conditions de fonctionnement d'autres équipements généralement situés à l'amont de la dite épuration, tels que compresseurs, échangeur atmosphérique, hydroréfrigérant, groupe frigorifique ; et/ou
- d'une diminution des pertes inhérentes au procédé telles par exemple que les entrées de chaleur sur les équipements fonctionnant à température inférieure à l'ambiante ; et/ou
- de changement de marche de (ou des) unité(s) aval tel qu'un fonctionnement à débit réduit par exemple.

En effet, de façon générale, l'épuration en eau et CO$_2$ est facilitée quand la température atmosphérique décroît.

La température plus froide de l'air comprimé en sortie du réfrigérant final du compresseur ou du groupe frigorifique (lui-même favorisé par une source froide à température inférieure) limite la quantité d'eau contenue et donc à arrêter par l'adsorbant.

La température d'adsorption du CO$_2$ diminue non seulement parce que la température d'entrée est plus basse, mais aussi parce que l'échauffement dû à l'adsorption de l'eau - en quantité plus faible - est lui-même inférieur.

Les variations de fonctionnement d'une épuration peuvent être supérieures aux seules modifications climatiques été/hiver et/ou jour/nuit, dans le cas d'appareils standards, destinés à être exploités aussi bien dans les pays froids que dans les pays plus chauds, tels les pays tropicaux.

Par ailleurs, le débit/pression d'air ou du fluide assurant la régénération peuvent dépendre de la marche de l'unité et on peut donc se retrouver au niveau de l'épuration avec des conditions de service réelles différentes des conditions de dimensionnement.

La présente invention va maintenant être mieux comprise à l'aide d'exemples et en références aux figures annexées, donnés à titre illustratif mais non limitatif.

## Exemple 1

Il concerne un appareil de purification et séparation d'air de type standard produisant de l'azote pur en petite quantité.

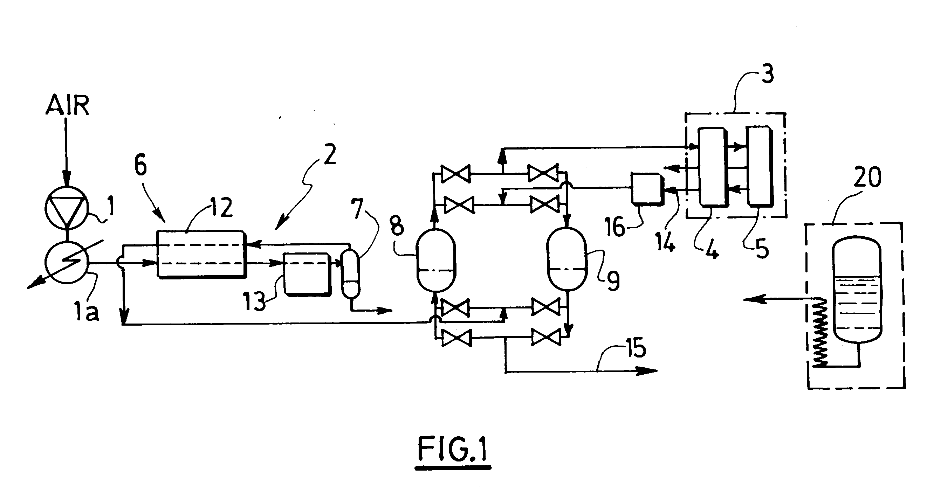

Le schéma de principe de la partie purification de cet appareil est du type décrit dans le document US-A-5,137,548, auquel on peut se reporter pour plus de détails, et est illustré sur la figure 1 ci-annexée.

Comme schématisé, sur la figure 1, l'air sortant du compresseur 1 est refroidi aux environs de la température ambiante (20 à 25°C) dans l'échangeur 1a, puis jusqu'à environ 5 à 10°C à travers les échangeurs 12 et 13.

Après séparation de l'eau condensée 7, l'air est réchauffé dans 12 puis envoyé vers l'unité d'épuration 8,9.

L'épuration s'effectue classiquement dans l'adsorbeur 8 à travers un double lit : alumine activée/ zéolite X.

L'air débarrassé de la vapeur d'eau, du $CO_2$ et d'une grande partie des polluants secondaires, tels les hydrocarbures et les NOx, est alors introduit dans la boîte froide 3 pour y être refroidi 4 et fractionné par distillation 5 cryogénique.

Le gaz résiduaire 14 sert à la régénération de l'autre adsorbeur 9, avant d'être mis à l'atmosphère, via la ligne 15.

Le réchauffeur 16 est un réchauffeur électrique qui apporte la puissance nécessaire à la régénération de l'adsorbant.

On demande à ce type d'appareil de produire le maximum d'azote en permanence afin de limiter la consommation d'azote liquide du stockage 20 qui lui est associé, lequel azote liquide sert également et préférentiellement à la tenue frigorifique de l'unité de séparation d'air en question.

Ainsi, par exemple, le compresseur 1 d'air traite tout le débit d'air possible et ce dernier est donc supérieur dans les pays froids ou en hiver que dans les pays chauds ou en été, respectivement.

De plus, l'échangeur 13 étant un groupe frigorifique classique, ses performances dépendent également des conditions de température extérieure.

En pratique, les caractéristiques du flux d'air en sortie de 12, c'est-à-dire à l'entrée de l'épuration, dépendent complètement des conditions climatiques...

Quand il fait chaud et humide, on obtient une température plus élevée, une quantité d'eau supérieure et un débit un peu plus faible que quand il fait froid et sec.

Donc, l'épuration doit être dimensionnée pour les conditions extrêmes afin de ne pas limiter la capacité de production de l'unité.

En particulier, ces conditions fixent la puissance du réchauffeur électrique.

Dès lors, sur ce type d'unités, cette puissance va être modulée en fonction des conditions atmosphériques réelles afin de minimiser la consommation énergétique, alors que par souci de simplicité la durée des différentes étapes sera maintenue constante.

Le paramètre principal étant la quantité d'eau à désorber à chaque cycle, la température de sortie du réchauffeur électrique 16 sera avantageusement adaptée en prenant comme paramètre la température en 7 (ci-après T7).

En pratique, le "set-point" (c'est-à-dire la température de sortie du réchauffeur est dans ce cas une fonction F de T7).

Il serait également possible de faire varier ce "set-point" en fonction des conditions climatiques extérieures.

Ce système permet donc, en réduisant la température du réchauffeur, lorsque les conditions d'adsorption sont plus favorables, de faire des économies d'énergie.

On note que, dans cet exemple, choisi volontairement très simple, la détermination de la fonction F n'est pas triviale.

En effet, elle doit intégrer une série d'effets provoqués par la variation des conditions atmosphériques, à savoir :

- modification du débit d'air,
- modification consécutive du débit de gaz résiduaire,
- évolution des pertes thermiques. Dans ce type d'unité les adsorbeurs ne sont pas isolés du fait des températures basses de régénération. Les pertes thermiques sont donc directement liées à la température de régénération.
- modification du bilan thermique entrée/sortie de l'adsorbeur... Un changement de la température de régénération introduit par voie de conséquence une modification de profil de température en sortie. La chaleur disponible pour la régénération (désorption des impuretés) est la différence entre quantité de chaleur entrant et la quantité de chaleur sortant,
- évolution de la quantité d'eau adsorbée suivant la loi : Tension de vapeur/Température.

S'agissant d'unités standards, l'altitude du site doit également être prise en compte car elle peut modifier sensiblement les conditions de fonctionnement de l'unité (Débits, Pressions...).

## Exemple 2

Il concerne l'épuration de type TSA d'une ASU de grande capacité. Dans ce cas, la consommation énergétique liée à la régénération devient importante en absolu et le système d'adaptation du cycle aux conditions réelles de fonctionnement est plus sophistiqué que celui décrit ci-dessus.

Au lieu de maintenir constante la durée des étapes et de ne jouer que sur la seule puissance du réchauffeur, on calcule à tout moment les durées optimales des étapes en prenant en compte le dimensionnement et les conditions de service.

Il ne s'agit plus d'une simple économie comme précédemment mais d'une véritable optimisation de l'unité d'adsorption.

Ainsi, pour la phase de régénération par chauffage, le système cumule à chaque scrutation les quantités de chaleur apportées et la décision de fin de chauffage est prise dès que l'énergie cumulée $E_c$ devient supérieure à la quantité de chaleur $E_o$ nécessaire pour la régénération, elle-même calculée en fonction des quantités d'eau et de $CO_2$ adsorbées précédemment dans l'adsorbeur en question.

Le débit de régénération servant au calcul de l'énergie introduite dans la bouteille en régénération peut être mesuré, ou obtenu par calcul par exemple par différence entre le débit d'air entrant dans l'ASU et les productions ou fixé proportionnellement au débit d'air traité, le facteur de proportionnalité pouvant dépendre du type de marche dans lequel se trouve l'appareil, si cette unité a été prévue pour effectuer des marches différentes quant aux productions.

Côté adsorption, on calcule à chaque instant la portion d'adsorbant utilisée depuis le début du cycle pour arrêter les impuretés présentes dans l'air à traiter. En cumulant ces valeurs à chaque scrutation depuis la mise en service d'une bouteille, on obtient le degré de saturation de l'adsorbant ou de chacun des adsorbants en cas de lits multiples.

La décision d'envoyer du gaz dans l'adsorbeur jusqu'alors en régénération, (en fin de refroidissement) pour y augmenter la pression, est prise lorsque la fraction de capacité restante pour l'un des adsorbants de l'unité en cours de phase de purification correspond à ce qui sera consommé pendant la durée nécessaire à l'inversion (repressurisation, mise en parallèle éventuelle...).

Le calcul de la portion d'adsorbant utilisé en fonction des conditions réelles de fonctionnement de l'épuration peut s'effectuer en rentrant un modèle de dimensionnement dans le système de contrôle.

Cette méthode étant généralement trop complexe pour être utilisée pratiquement, un développement limité au premier ordre peut rendre compte des variations de capacité d'adsorption en fonction des conditions d'alimentation (Pression, Température, Débit).

Pour une approche plus précise, on recalcule, lors de la conception de l'unité les durées d'adsorption et de régénération optimales compte tenu du dimensionnement effectué pour une série de points représentative de la plage de fonctionnement possible de l'unité en fonction des conditions atmosphériques et des types de marche prévus.

Un programme de régression à plusieurs variables permet alors de définir les coefficients optimaux à utiliser pour adapter le cycle aux conditions de fonctionnement.

Le nombre de points de calcul utilisé peut aller de 3 pour une unité avec une marche unique jusqu'à 72 dans les cas les plus complexes (multi produits, multi pureté, production gaz et liquide modulable).

Les paramètres utilisés sont généralement pour la phase d'adsorption le débit d'air, la pression et la température à l'entrée de l'épuration, sachant que dans la grande majorité des cas, l'air en sortie du réfrigérant final du compresseur est à saturation en eau et que le $CO_2$ quant à lui reste généralement dans une fourchette de teneur réduite. Si nécessaire, ces teneurs peuvent être prises en compte par le système.

On notera aussi que l'évolution de la température dans le lit pendant la phase d'adsorption peut fournir indirectement des éléments sur le débit (vitesse de propagation du front) et sur la quantité d'eau car l'élévation de température est en première approximation proportionnelle à la quantité d'eau contenue dans le gaz.

De même, une mesure (électrique ou autre) sur la machine de compression peut fournir une indication indirecte du point de fonctionnement (débit, pression).

Côté régénération les paramètres habituels sont le débit de régénération et la température du gaz de régénération.

On note que la méthode utilisée quand elle se base sur la température de régénération directement à l'entrée de l'adsorbeur prend automatiquement en compte les déperditions thermiques et le temps de réponse du réchauffeur.

## Exemple 3

Le principe de la méthode décrite ci-dessus peut être adapté dans le cas d'appareils particuliers.

Ainsi l'exemple 3 se rapporte à un appareil de séparation d'air de grande capacité dont le résiduaire servant à la régénération de la dessiccation-décarbonation n'est pas rejeté à l'atmosphère, comme c'est usuellement le cas, mais utilisé sous pression dans une unité amont. Cette pression est variable autour d'une valeur nominale suivant le fonctionnement de ladite unité aval.

L'appareil de fractionnement d'air s'adapte à la pression requise pour sa propre optimisation énergétique.

Ainsi la pression de régénération peut elle varier au cours du temps.

Le modèle précédent a été aménagé pour prendre en compte ce paramètre au niveau de la régénération.

En particulier, l'énergie nécessaire à la régénération $E_o$ est corrigée en fonction de la pression du résiduaire par l'intermédiaire d'un polynôme ayant cette pression comme variable.

L'expression retenue dans ce cas est à titre d'exemple :

$$E_O = (1 + \in).(Q_{H20} \cdot \Sigma m_{H20} \, \Delta t + Q_{CO2} \text{ x}$$

$$\Sigma m_{CO2} \, \Delta t + Q_s).(a + b.P / P_0)$$

où :

$\Sigma m_{H20} \, \Delta t$ et $\Sigma m_{CO2} \, \Delta t$ sont respectivement les quantités d'eau et de $CO_2$ rentrées pendant la phase d'adsorption de ladite bouteille, ($m_{H20}$ étant déterminée à chaque scrutation en fonction des conditions débit, pression, température de l'alimentation...),

- a et b étant les paramètres obtenus par calcul,
- P étant la pression réelle du gaz résiduaire,
- $P_o$ étant la pression nominale de ce même gaz,
- $Q_{H20}$ et $Q_{CO2}$ sont les chaleurs moyennes d'adsorption de l'eau et du $CO_2$ sur les adsorbants retenus, et
- $Q_s$ est la quantité d'énergie excédentaire permettant de compenser les pertes thermiques (constante ou fonction de la régénération).

L'expression dans la dernière parenthèse permet de prendre en compte l'effet de variation de pression du gaz résiduaire.

Enfin, le coefficient $\in$ permet d'ajuster la quantité de chaleur théorique pour obtenir la sortie de front de chaleur désirée sur l'installation en question. Il est possible de faire varier automatiquement le coefficient $\in$ dans une fourchette réduite par rapport au coefficient de départ $\in_o$ (par exemple entre 0.90 $\in_o$ et 1.10 $\in_o$) pour se caler de façon encore plus précise sur le profil de sortie de température souhaitée. Cela peut être le cas pour mieux prendre en considération les variations des déperditions thermiques entre l'hiver et l'été par exemple...

Ce calage peut s'effectuer par exemple sur un niveau maxi de température en sortie d'adsorbeur en fin de régénération.

Ce dernier paramètre vient alors en ajustement du calcul prédictif mais non en régulation directe de la régénération car lorsque le front de chaleur sort de l'adsorbeur, il est généralement trop tard pour agir utilement sur les conditions opératoires en cours.

Plus généralement, le programme de conduite automatique d'épuration d'air permet la visualisation, en continu, d'un certain nombre de paramètres, tels que le degré de saturation des lits, les temps restant avant perçage à supposer que les conditions restent identiques à celles de la dernière scrutation, le degré d'avancement de la régénération...

Il peut être équipé d'alarmes signalant des défauts de fonctionnement (comme une température basse entrée adsorbeurs en phase de chauffage...), des incohérences dans les durées d'étapes (durée de refroidissement insuffisante...) qui permettent de réagir, si nécessaire, à temps pour éviter toute pollution accidentelle ou perturbation dans le fonctionnement de l'ASU.

Les différents paramètres du modèle déterminés théoriquement lors de la conception de l'unité peuvent, si nécessaire, faire l'objet d'ajustement pour mieux caler les points de fonctionnement réels et tirer parti des sécurités ou surdimensionnement éventuels.

Cela peut être par exemple le cas pour le coefficient $\in$ de la formule ci-dessus, comme on l'a vu.

## Revendications

1. Procédé de purification d'un flux gazeux à purifier contenant au moins une impureté choisie parmi le dioxyde de carbone ($CO_2$) et la vapeur d'eau ($H_20$), comprenant :

   - au moins une étape d'adsorption sur au moins un lit d'adsorbant contenu dans au moins un adsorbeur, d'au moins une partie des impuretés contenues dans le flux gazeux à purifier, le flux gazeux à purifier étant à une température d'adsorption (Ta), et
   - au moins une étape de régénération d'au moins une partie dudit lit d'adsorbant contenu dans ledit au moins un adsorbeur avec au moins un gaz de régénération introduit dans ledit au moins un adsorbeur, la température de régénération (Tr) dudit gaz de régénération étant supérieure à la température (Ta) du flux gazeux à purifier,

   caractérisé en ce qu'on contrôle, on modifie et/ou on régule au moins un paramètre d'énergie choisi parmi le débit du gaz de régénération entrant et/ou sortant dudit au moins un adsorbeur, la durée de l'étape de régénération et la température de régénération (Tr) dudit gaz de régénération entrant dans ledit au moins un adsorbeur, en fonction d'au moins une condition opératoire choisie parmi la pression du flux gazeux à purifier entrant et/ou sortant dudit au moins un adsorbeur, le débit du flux gazeux à purifier entrant et/ou sortant dudit au moins un adsorbeur, la température (Ta) du flux gazeux à purifier entrant dans ledit au moins un adsorbeur et/ou la teneur en au moins une desdites impuretés contenues dans flux gazeux à purifier entrant dans ledit au moins un adsorbeur, et en fonction du profil thermique à la sortie du front de chaleur en sortie d'au moins un adsorbeur en fin de régénération.

**2.** Procédé selon la revendication 1, caractérisé en ce qu'au moins une desdites conditions opératoires est déterminée directement par au moins une mesure:

- de la pression du flux gazeux à purifier entrant et/ou sortant d'au moins un adsorbeur, de préférence au moyen d'un manomètre,
- du débit du flux gazeux à purifier entrant et/ou sortant d'au moins un adsorbeur, de préférence au moyen d'un débitmètre,
- de la température (Ta) du flux gazeux à purifier entrant dans au moins un adsorbeur, de préférence au moyen d'un thermomètre ou d'un capteur de température, et/ou
- de la teneur en au moins une impureté du flux gazeux à purifier entrant dans au moins un adsorbeur, de préférence au moyen d'un analyseur de gaz.

**3.** Procédé selon la revendication 1, caractérisé en ce qu'au moins une desdites conditions opératoires est déterminée indirectement par au moins une mesure prise parmi:

- . une ou plusieurs conditions atmosphériques, de préférence une ou plusieurs conditions atmosphériques choisies dans le groupe formé par la température, la pression et/ou l'hygrométrie ;
- . une ou plusieurs conditions à l'aspiration d'au moins un compresseur de gaz comprimant le gaz à épurer de préférence une ou plusieurs conditions à l'aspiration du compresseur choisies dans le groupe formé par la température, la pression et/ou l'hygrométrie ;
- . une ou plusieurs conditions de pression et/ou température au moins au niveau d'au moins un séparateur fluide/liquide, le liquide à séparer étant essentiellement l'eau atmosphérique et/ou de l'eau de réfrigération issu d'un échange thermique par contact direct ;
- . une ou plusieurs conditions de température dans au moins un lit d'adsorbant ; et
- . une ou plusieurs conditions de fonctionnement d'un compresseur de gaz, en particulier l'énergie consommée et/ou la vitesse de rotation du compresseur.

**4.** Procédé selon l'une des revendications 1 à 3, caractérisé en ce qu'on opère une mesure de la température maximale pendant la sortie dudit front de chaleur et une comparaison de cette température maximale mesurée avec une température cible prédéterminée.

**5.** Procédé selon l'une des revendications 1 à 4, caractérisé en ce qu'au moins un lit d'adsorbant contient une zéolite X ayant un rapport Si/Al d'environ 1 à environ 1.5 et/ou au moins un lit de particules d'alumine activée.

**6.** Procédé selon l'une des revendications 1 à 5, caractérisé en ce qu'au moins un lit de particules d'alumine activée est situé en amont d'au moins un lit de zéolite X, de préférence de zéolite LSX ayant un rapport Si/Al d'environ 1

**7.** Procédé selon l'une des revendications 1 à 6, caractérisé en ce que :

- la pression d'adsorption est comprise entre 2 bars et 30 bars; et/ou
- la pression de régénération est comprise entre 1 bar et 30 bars ; et/ou
- la température d'adsorption (Ta) est comprise entre 0°C et +80°C ; et/ou
- la température de régénération (Tr) est comprise entre 20°C et 200°C.

**8.** Procédé selon l'une des revendications 1 à 7, caractérisé en ce que le rapport du débit de régénération au débit d'adsorption est compris entre 5% et 80%.

**9.** Procédé selon l'une des revendications 1 à 8, caractérisé en ce qu'il comporte au moins une étape de distillation cryogénique du flux de gaz purifié sortant d'au moins un adsorbeur.

**10.** Procédé selon l'une des revendications 1 à 9, caractérisé en ce que le flux gazeux à purifier est de l'air.

**11.** Procédé selon l'une des revendications 1 à 10, caractérisé en ce que le gaz de régénération est essentiellement de l'azote ou un flux gazeux contenant de l'oxygène.

**12.** Procédé selon l'une des revendications 1 à 10, caractérisé en ce qu'il est choisi parmi les procédés TSA.

**13.** Système de purification de gaz susceptible de mettre en oeuvre un procédé selon l'une des revendications 1 à 12, comprenant :

- au moins un adsorbeur contenant au moins un lit d'adsorbant,
- au moins une source de flux gazeux à purifier contenant au moins une impureté choisie parmi le dioxyde de carbone ($CO_2$) et la vapeur d'eau ($H_2O$),
- au moins une source de gaz de régénération,

- des moyens d'alimentation d'au moins ledit adsorbeur pour introduire ou alimenter alternativement ledit au moins un adsorbeur :

  . en le flux gazeux à purifier pour adsorber au moins une partie desdites impuretés contenues dans ledit flux gazeux à purifier sur ledit adsorbant, et

  . en le gaz de régénération pour désorber au moins une partie desdites impuretés adsorbées sur ledit adsorbant,

- des moyens de contrôle pour contrôler, modifier et/ou réguler au moins un paramètre d'énergie choisi parmi le débit du gaz de régénération entrant et/ou sortant dudit au moins un adsorbeur, la durée de l'étape de régénération et la température de régénération (Tr) dudit gaz de régénération entrant dans ledit au moins un adsorbeur, en fonction d'au moins une condition opératoire choisie parmi la pression du flux gazeux à purifier entrant et/ou sortant dudit au moins un adsorbeur, le débit du flux gazeux à purifier entrant et/ou sortant dudit au moins un adsorbeur, la température (Ta) du flux gazeux à purifier entrant dans ledit au moins un adsorbeur et la teneur en au moins une desdites impuretés contenues dans flux gazeux à purifier entrant dans ledit au moins un adsorbeur et en fonction du profil thermique à la sortie du front de chaleur en sortie d'au moins un adsorbeur en fin de régénération.

FIG.1

EP 1 080 773 A1

**Office européen des brevets**

**RAPPORT DE RECHERCHE EUROPEENNE**

Numéro de la demande

EP 00 40 2346

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 4 197 095 A (PICEK CHARLES R ET AL) 8 avril 1980 (1980-04-08) * colonne 5, ligne 15 – colonne 6, ligne 53 * * colonne 7, ligne 54 – colonne 8, ligne 39 * * colonne 17, ligne 54 – colonne 18, ligne 21 * | 1-4, 11-13 | B01D53/04 |
| P,X | WO 99 54023 A (L'AIR LIQUIDE) 28 octobre 1999 (1999-10-28) * revendications 1-16; tableaux I,II * | 1-8,10, 11,13 | |
| A | DATABASE WPI Section Ch, Week 198313 Derwent Publications Ltd., London, GB; Class J01, AN 1983-31404K XP002139276 & SU 929 178 A (GIREDMET RARE MET), 25 mai 1982 (1982-05-25) * abrégé * | 1,2 | |
| | | | DOMAINES TECHNIQUES RECHERCHES (Int.Cl.7) |
| A | EP 0 718 024 A (BOC GROUP INC) 26 juin 1996 (1996-06-26) * le document en entier * | 5-9 | B01D F25J |
| D | & US 5 531 808 A 2 juillet 1996 (1996-07-02) | | |
| D,A | US 5 137 548 A (GASTINNE SOPHIE ET AL) 11 août 1992 (1992-08-11) * le document en entier * | 1-13 | |
| A | EP 0 925 821 A (PRAXAIR TECHNOLOGY INC) 30 juin 1999 (1999-06-30) * revendications 1-9 * | 1 | |

Le présent rapport a été établi pour toutes les revendications

| Lieu de la recherche | Date d'achèvement de la recherche | Examinateur |
|---|---|---|
| BERLIN | 12 décembre 2000 | Cubas Alcaraz, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

12

**ANNEXE AU RAPPORT DE RECHERCHE EUROPEENNE
RELATIF A LA DEMANDE DE BREVET EUROPEEN NO.**　　　　EP 00 40 2346

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-12-2000

| Document brevet cité au rapport de recherche | Date de publication | Membre(s) de la famille de brevet(s) | Date de publication |
|---|---|---|---|
| US 4197095　A | 08-04-1980 | AU　　515509　B | 09-04-1981 |
| | | AU　5044979　A | 06-03-1980 |
| | | BR　7905588　A | 13-05-1980 |
| | | CA　1119972　A | 16-03-1982 |
| | | DE　2966136　D | 13-10-1983 |
| | | DK　　364079　A,B, | 01-03-1980 |
| | | EP　0009139　A | 02-04-1980 |
| | | ES　　483739　A | 01-10-1980 |
| | | FI　　792704　A | 01-03-1980 |
| | | JP　1592481　C | 14-12-1990 |
| | | JP　2007688　B | 20-02-1990 |
| | | JP　55035996　A | 13-03-1980 |
| | | MX　　153812　A | 19-01-1987 |
| | | NO　　792819　A,B, | 03-03-1980 |
| | | PT　　70127　A | 01-09-1979 |
| | | ZA　7904555　A | 24-09-1980 |
| WO 9954023　A | 28-10-1999 | FR　2777477　A | 22-10-1999 |
| | | AU　3335299　A | 08-11-1999 |
| SU 929178　A | 23-05-1982 | AUCUN | |
| EP 0718024　A | 26-06-1996 | US　5531808　A | 02-07-1996 |
| | | AU　　691699　B | 21-05-1998 |
| | | AU　4044995　A | 04-07-1996 |
| | | CA　2162345　A | 24-06-1996 |
| | | CN　1131053　A | 18-09-1996 |
| | | JP　8252419　A | 01-10-1996 |
| | | KR　　196879　B | 15-06-1999 |
| | | NZ　　280470　A | 26-01-1998 |
| | | PL　　312035　A | 24-06-1996 |
| | | SG　　34310　A | 06-12-1996 |
| | | TR　　960571　A | 21-07-1996 |
| | | ZA　9510101　A | 20-06-1996 |
| US 5137548　A | 11-08-1992 | FR　2661841　A | 15-11-1991 |
| | | AU　　643007　B | 04-11-1993 |
| | | AU　7604591　A | 14-11-1991 |
| | | CA　2042003　A | 10-11-1991 |
| | | DE　69107115　D | 16-03-1995 |
| | | DE　69107115　T | 24-05-1995 |
| | | EP　0456575　A | 13-11-1991 |
| | | ES　2067173　T | 16-03-1995 |
| | | JP　6079124　A | 22-03-1994 |
| | | ZA　9103458　A | 26-02-1992 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**          EP 00 40 2346

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-12-2000

| Document brevet cité au rapport de recherche | Date de publication | Membre(s) de la famille de brevet(s) | Date de publication |
|---|---|---|---|
| EP 0925821 A | 30-06-1999 | US 5989313 A<br>BR 9805413 A | 23-11-1999<br>14-12-1999 |

EPO FORM P0460

Pour tout renseignement concernant cette annexe : voir Journal Officiel de l'Office européen des brevets, No.12/82